# EUROPEAN PATENT APPLICATION

(11) **EP 2 857 719 A1**
(43) Date of publication of application: **08.04.2015**
(21) Application number: 14187545.0
(22) Date of filing: 02.10.2014
(51) Int. Cl.: F16H 7/08

(54) **Method for tensioning a belt system, and respective system**

(30) Priority: 02.10.2013 IT MI20131627
(71) Applicant: SIT S.P.A., 20090 Cusago (MI) (IT)
(72) Inventor: Ceruti, Pierantonio, I-20090 Cusago MI (IT)
(74) Representative: Marietti, Andrea

(57) **Abstract**

Belt system comprising at least one bush which can be constrained to a pulley of the same belt system, and coupling means for coupling at least rotationally the bush with the pulley, which are suitable to define at least one first position of axial misalignment between pulley and bush and at least one second position of substantially axial alignment between the same. The system further comprises constraining means for steadily constraining the pulley to the bush. According to the invention the afore mentioned belt system can be used for carrying out the steps of: constraining the bush to the respective pulley in an offset and at least rotatable way; assembling at least one portion of the belt of the belt system on the afore said pulley; carrying out a relative rotation between bush and pulley, until the mentioned second position of substantially axial alignment between bush and pulley is reached, so that to tension the belt; steadily constraining the bush to the pulley through the constraining means.

## Description

The present invention concerns the field of transmission belts, and in particular relates to a method for tensioning belts, when these have to be assembled on the respective pulleys.

As known, belt systems comprise, in addition to the belt, pulleys movable around respective shafts. One of these shafts is usually connected to a motor and drives the respective pulley, which in its turn moves the belt. The belt is contacted with the remaining pulleys of the system, which are generally idle around a respective shaft, so that to transmit a rotation motion to the pulleys.

An element can be used in order to constrain the pulley to the respective shaft. Such an element, generally having the shape of a sleeve, is known in the art as a bush, and is coaxially interposed between shaft and pulley.

A relevant factor for a good yield of the motion transmission from the drive shaft constrained to the drive pulley to the idle pulleys, is the tension the belt in use is subjected to. Different methods are known in the art for tensioning the belt before use and/or for adjusting the belt tension during the operations thereof.

For example, hydraulic systems are known for assembling the bush to the pulley, and for allowing the belt tensioning. Such systems, although effective, are found expensive and complex.

Systems are known as well wherein at least one of the shafts, around which a relative coupling between bush and pulley rotates, is translatable so that to adjust the belt tension. Such methods provide for complex kinematic systems, and need the displacement of at least one of the system shafts.

Object of the present invention is the implementation of a system and a method which allow to carry out, easily and cost effectively, the tensioning of a belt in a belt system.

Further object of the present invention is the implementation of a system and relevant method which allow to carry out such a tensioning without carrying out translations on the shafts carrying the bushes and pulleys.

These and other objects are reached by the present invention through a method according to claim 1, a belt system for transferring the motion from a drive pulley to at least one driven pulley according to claim 6 and a bush for a pulley of a belt system according to claim 11. Particular features of the present invention are defined in the respective dependent claims.

The belt system comprises, in particular, at least one bush which can be constrained to a pulley of the same belt system, and coupling means for coupling at least rotationally the bush with the pulley, which are suitable to define at least one first position of axial misalignment between pulley and bush and at least one second position of substantially axial alignment between the same. The system further comprises constraining means for steadily constraining the pulley to the bush.

According to the invention the afore mentioned belt system can be used for carrying out the steps of:
- constraining the bush to the respective pulley in an offset and at least rotatable way;
- assembling at least one portion of the belt of the belt system on the afore said pulley;
- carrying out a relative rotation between bush and pulley, until the afore mentioned second position of substantially axial alignment between bush and pulley is reached, so that to tension the belt;
- constraining steadily the bush to the pulley, through the constraining means.

It becomes evident to the person skilled in the art that the terms "axial misalignment" and "substantially axial alignment" are referred to the symmetry axes of the bush and pulley.

Thanks to the present invention, no outer mechanisms or kinetic systems in addition to bush and pulley are needed in order to tension the belt, since the configuration of the coupling between bush and pulley only allows for simply and effectively assembling and tensioning the belt.

In particular, such a method applies in a particularly effective way to belt systems having a fixed center-to-center distance, wherein the shafts carrying bushes and pulleys can not be translated; in other words, the mutual distance among the shafts of a belt system having a fixed center-to-center distance can not be changed.

In these systems, according to the present invention, during the step of relative rotation between bush and pulley, only the pulley is rotated around the bush, whereas the bush remains integral with the shaft, thus without being subjected to translations. Since such a rotation of the pulley around the bush occurs eccentrically (if considered in plan view), the pulley changes its own position in the space, resulting in a belt tensioning.

In a preferred embodiment of the present invention, the coupling means comprise a slot, inside which constraining means for constraining said bush to said pulley are at least slidable. Typically, such constraining means are common screws, bolts or similar elements.

According to an aspect of the present invention, before at least the step of relative rotation, the bush is constrained to a drive shaft.

Referring to the attached figures, an exemplary and not limitative embodiment of the present invention is now described, in which:
- figures 1A, 1B and 1C are a front perspective and rear perspective front views, respectively, of a bush according to the present invention;
- figure 2 is a front view of a belt system according to the present invention, in a first operative position;
- figure 3 is a front view of a belt system according to the present invention, in a second operative position.

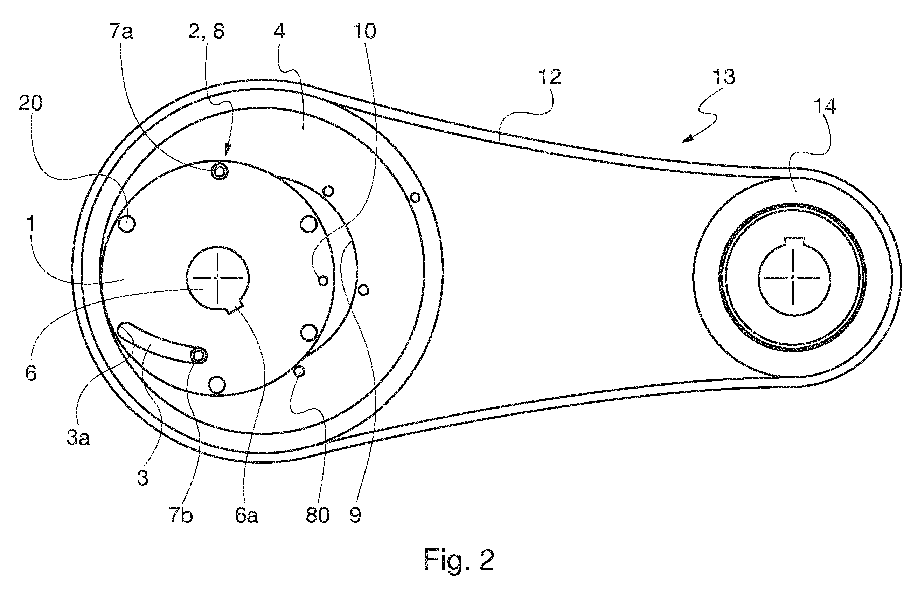

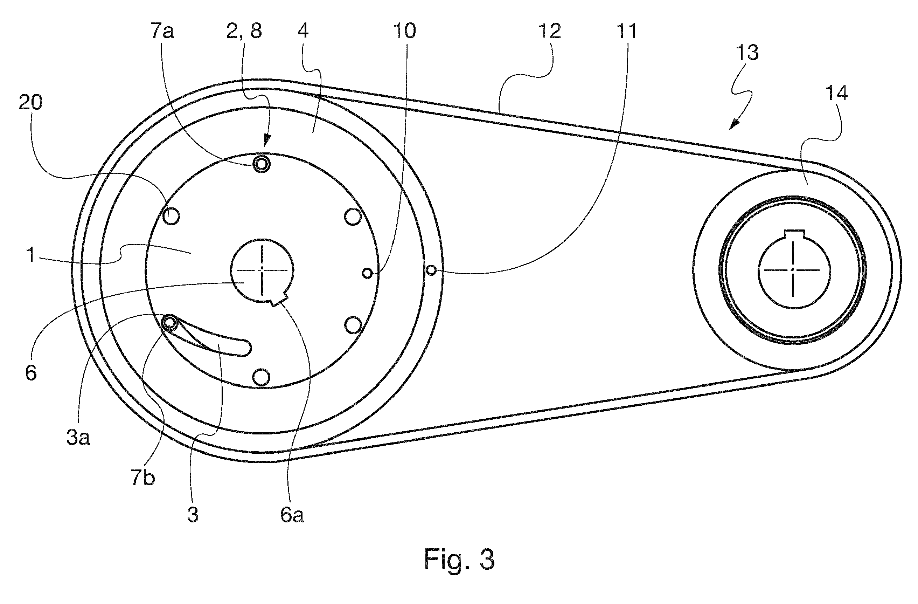

Referring to figures, the belt system 13 for transmitting the motion from a drive pulley to at least one driven pulley, according to the present invention, comprises a pulley 4 which can be constrained to a bush 1, which bush is provided with coupling means 2, 7a, 3, 7b, for coupling at least rotationally with the respective pulley 4. As it will be better specified in the following, such coupling means 2, 7a, 3, 7b advantageously allow for defining at least one first position of axial misalignment between pulley 4 and bush 1, the position being visible in figure 2, and at least one second position of substantially axial alignment between these, the position being visible in figure 3.

Note that, as known, both the bush 1 and the pulley 4 have a substantially cylindrical geometry with central symmetry axis and circular directrixes (bases). Therefore, a position of axial misalignment will result between bush 1 and pulley 4 when the symmetry axes of such components are not aligned one to another, and a coaxial position will rather result when such symmetry axes of bush 1 and pulley 4 are aligned and coincident.

The bush 1, as known in the art, has a general cylindrical shape, and is provided with a central assembling hollow 6 for the coupling with a shaft, not shown in figures, of the belt system 13 for transferring motion between a drive pulley and at least one driven pulley.

On one of the two faces of the bush 1, there is also a hollow cylindrical protrusion 5 suitable to allow the coupling, externally, with a pulley 4, and internally with a shaft of the belt system 13, not shown in figures. The assembling hollow 6, in the embodiment of the invention herein shown, crosses the cylindrical protrusion 5. Ultimately, as visible in figures, the bush 1 is thus geometrically composed of a disk shaped circular base, the afore said cylindrical protrusion 5 centrally extending therefrom and being provided with the assembling hollow 6.

The cylindrical protrusion 5 of the bush 1, in particular, is suitable to be inserted in a complementary seat 9 centrally obtained in the pulley 4, so that such a seat 9 acts as a receptacle, whereas such a protrusion 5 acts as a plug in the coupling of the pulley 4 with the bush 1.

The pulley 4, in this way, is a cylinder with a circular base, provided with an axial hole, circular as well, which composes the afore said seat 9.

The cylindrical protrusion 5 and the complementary seat 9 are typically dimensioned so as to allow a coupling between the two components with some clearance, adequate at least to allow the eccentric rotation (when seen along the symmetry axis of such components) between bush 1 and pulley 4, as it will be better described in the following.

The hole 6 is a possible example of means for constraining the bush 1 to a shaft, preferably but not exclusively, to a drive shaft of the belt system 13, whereas the protrusion 5, with the afore said seat 9 of the respective pulley 4, is part of the means for coupling at least rotationally the bush 1 to the pulley 4. Different configurations of such means known in the art can be used with a bush 1 characterized according to the present invention, and thus fall in the protection scope herein required, as long as they allow a relative rotation between bush 1 and pulley 4.

According to a particular aspect of the present invention, the pulley 4 and the bush 1 are coupled one with another not only through the engagement of the seat 9 of the pulley 4 with the cylindrical protrusion 5 of the bush 1, but also through the afore said coupling means 2, 7a, 3, 7b, and are then mutually fastened through fastening means for their steady fastening.

The coupling means 2, 7a, 3, 7b, in the herein shown embodiment of the invention, are preferably split in pivot means 2, 7a, which allow at least the relative rotation between pulley 4 and bush 1, at least between a first position of axial misalignment of such components 1, 4 and a second position wherein such components 1, 4 are substantially axially aligned, i.e. they are coaxial, and guide means 3, 7b which are suitable to define at least the afore said second position wherein the bush 1 and the pulley 4 are coaxial, although they are preferably designated to define both the afore said positions.

In particular, the pivot means 2, 7a define at least one axis (center) of relative eccentric rotation between bush 1 and pulley 4 which is parallel, but distant, or however separated from both the symmetry axes of such components, whereas the guide means 3, 7b define a guide for the relative displacement between bush 1 and pulley 4 which is provided with at least one limit stop to define the afore said second position wherein the bush 1 and the pulley 4 are in a substantially axial alignment. With the term "distant" it is generally meant that the axis of relative rotation does not coincide with any of the symmetry axes between bush and pulley, and is located at such a distance therefrom to allow a sensibly eccentric rotation between bush 1 and pulley 4.

In the herein shown embodiment of the invention, the pivot means 2, 7a comprise at least one peripheral hole 2, i.e. obtained on the bush 1 in a distal position with respect to the symmetry axis of the bush 1 itself, and first constraining means 7a, fastened or constrained to the pulley 4, which allow, at least in a conformation thereof, the relative rotation of the pulley 4 with respect to the bush 1, whereas the afore said guide means 3 are shaped as a slot 3 obtained on the bush 1 too, inside which second constraining means 7b slide as constrained to the pulley 4 too.

More in detail, the peripheral hole 2, although parallel to the symmetry axis of the bush 1, is preferably obtained in a peripheral position on the same bush 1, i.e. along the outer edge of its circular base, and is part of a plurality of holes 20 obtained at the base periphery of the bush 1 which, as it will be seen, will help allowing the steady fastening between pulley 4 and the bush 1 itself.

The afore said first constraining means 7a, in the embodiment of the invention herein shown, are preferably composed of a first rod-shaped element which is shaped, at least partially, like a pivot pin suitable to be constrained both to the hole 2 of the bush 1 and to a corresponding hole 8 obtained in the pulley 4, such as to allow at least one freedom degree of rotation to the pulley 4 with respect to the bush 1.

In particular, the pivot pin element 7a can be shaped as a bolt, or a screw, which is fastened to the holes 2 and 8, and which is rotatable at least inside the hole 2, so as to allow the relative rotation between bush 1 and pulley 4 around their own axis, thus acting as pivot pin for the pulley 4 with respect to the bush 1.

Note that the hole 8 of the pulley 4, in the herein shown embodiment, is obtained on the inner edge of the central opening forming the afore mentioned seat 9 of the pulley 4 itself and can be part of a plurality of holes 80 having the function, as it will be seen, of allowing the steady fastening of the bush 1 to the pulley 4.

In the embodiment shown in figures, the coupling means 2, 7a, 3, 7b also comprise the afore said guide means 3, 7b composed of a slot 3 obtained on the bush 1, inside which second constraining means 7b can slide as constrained also to the pulley 4.

In particular, the second constraining means 7b can be composed of a rod-shaped element in the manner of a follower pin, for example a bolt or a screw, shaped to be constrained, and in case fastened, to the pulley 4, and also to be slidingly constrained inside the slot 3 of the bush 1. Such a follower pin element 7b can be constrained, or fastened, to a suitable hole belonging to the afore said plurality of holes 80 of the pulley 4, selected such that to allow the insertion of such a second element 7b into the slot 3, or it can be constrained to a hole, or a seat, obtained ad hoc on the pulley 4, so that such a follower pin element 7b can be inserted and can slide in the slot 3 when the pivot pin element 7a is constrained to the holes 2 and 8.

The slot 3 allows to define at least the second position of substantial axial alignment between bush 1 and pulley 4. In particular, one of the two ends 3a of the slot 3 acts as a limit stop for the sliding of the follower pin element 7b inside the slot 3, thus limiting the relative rotation between bush 1 and pulley 4, so that to stop the pulley 4 itself in the above mentioned second position of axial alignment, or coaxial position. This way the slot 3, according to a herein illustrated characteristic aspect of the invention, constitutes the so-called guide means and its end 3a acts as a limit stop to define the afore said second position of substantial axial alignment between bush 1 and pulley 4.

In the herein shown embodiment, the slot 3 has the shape of an arc of a circle and defines both the afore said first position of axial misalignment and second coaxial position of the pulley 4 with respect to the bush 1. The radius of such an arc of a circle is generally different from the radius of the base of the bush 1, so as to allow the afore mentioned eccentric rotation of the pulley 4 with respect to the bush 1.

In particular, the arc of a circle of the slot 3 is preferably shaped so that the center of such a circle is positioned substantially at the hole 2.

Note that, in the herein illustrated embodiment of the invention, whereas the hole 2 obtained on the bush has to be a well defined hole from the plurality of holes 20, i.e. that hole which is center of rotation for the follower pin element 7b inside the slot 3, the hole 8 of the pulley 4 for the pivot pin element 7a, when the respective hole of the pulley 4 for the follower pin element 7b can be identified in the plurality of holes 80, can be selected arbitrarily.

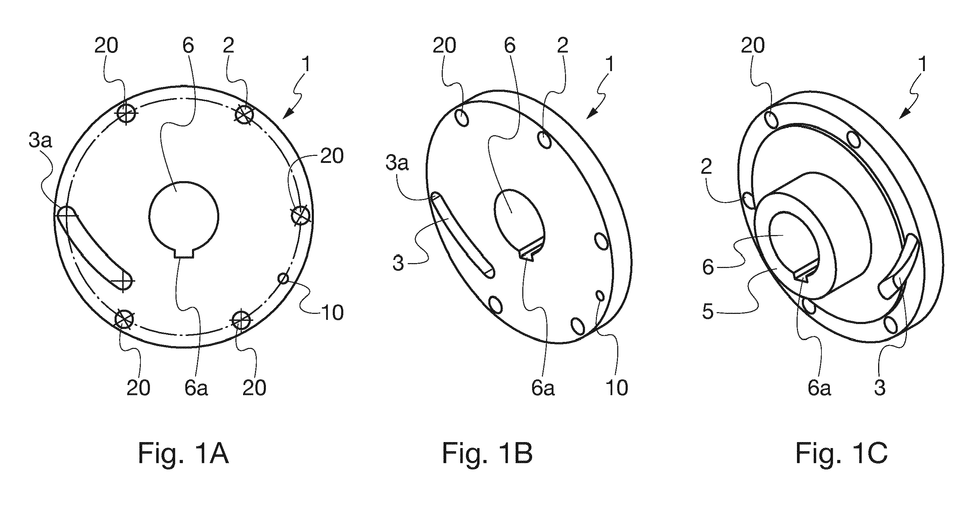

Preferably, as outlined afore, the hole 2 and the peripheral holes 20 are arranged along a circle on the base of the bush 1, and the end 3a of the slot 3 which, as said, defines the second coaxial position of the pulley 4 with respect to the bush 1, is in its own turn arranged on such a circle. This aspect is shown in particular in figure 1a.

In general, according to the herein shown embodiment of the invention, the pivot means 2, 7a of the coupling means for the coupling between bush 1 and pulley 4 generally comprise a hole 2 and a respective pivot pin element 7a suitable to define an axis of relative eccentric rotation for these ones, whereas the guide means 3, 7b generally comprise a follower pin element slidingly coupled with a slot 3, provided with limit stop to define at least the afore said second position in which the bush 1 and the pulley 4 are coaxial.

Note that, although the case has been described afore in which the hole 2 and the slot 3 are made on the bush 1 and the elements 7a, 7b are consequently constrained to the pulley 4, in addition to the hole 2 and the slot 3, any other arrangement of such components on the bush 1 and the pulley 4 is naturally possible and falls within the common knowledge of the person skilled in the art.

The belt system 13, as mentioned, also comprises means for allowing the steady fastening of the pulley 4 to the bush 1, at least when such a pulley 4 is in its second position of axial alignment (coaxiality) with the bush 1.

In the particular conformation of the invention herein shown, both the first constraining means 7a (pivot pin element) and the second constraining means 7b (follower pin element) can be fastened or tightened with the holes 2 and 8 of the bush 1 and the pulley 4, respectively, to make steady the coupling between the pulley 4 and the bush 1, once the eccentric rotation between pulley 4 and bush 1 has been carried out and thus the belt system 13 has been tensioned, as better specified in the following. The constraining means 7a, 7b, in the particular embodiment of the invention herein shown, thus act as both rotationally coupling means and fastening means for the steady fastening between pulley and bush 1.

For example, the constraining means 7a, 7b can be composed of bolts inserted in the afore mentioned holes 2 and 8 and in the slot 3 and dimensioned such that, before their respective tightening, they allow the relative rotation between pulley 4 and bush 1, allowing in particular the rotation around the axis of the hole 2 and the sliding inside the slot 3, respectively, and such that, upon their tightening, they allow a steady, although preferably reversible, fastening between pulley 4 and bush 1.

Note that in the embodiment of the herein shown invention, when the bush 1 and the pulley 4 are in their second coaxial position as a consequence of their relative eccentric rotation, the holes 20 and the holes 80, respectively obtained on the bush 1 and the pulley 4, are aligned one to another so as to allow the insertion of additional constraining means in their inside, preferably of the threaded type such as bolts or screws, which once tightened will contribute to the fastening of the pulley 4 to the bush 1.

In an embodiment of the present invention herein not shown, such holes 20, 80, with the respective constraining means, can be the only means for the steady, although preferably reversible, fastening between bush 1 and pulley 4, whereas the constraining means 7a and 7b can only act as coupling means, i.e. as pins, which do not allow fastening the bush 1 and the pulley 4 one to another.

Moreover, although the constraining means 7a, 7b are shown to be of the same type because of both the hole 2 and the slot 3, the use of two different types of constraining means is not excluded.

Lastly, different configurations of the coupling means 2, 7a, 3, 7b with respect to what shown in figures, are possible.

For example the bush could be provided, on its own face facing the pulley, with a protrusion suitable to be inserted into a respective seat on the pulley itself, so that to act as a pin and therefore allow a relative rotatory motion between the two parts. Similarly, the pulley could be provided with an additional protrusion, suitable to be inserted into a slot similar to the described slot 3.

This way the use of constraining means 7a, 7b collaborating with the coupling means 2, 3 would not be needed, since their function would be directly carried out by bush and pulley.

Furthermore, the slot 3 could be not "through", i.e. it could not cross the bush from part to part, rather it can be obtained as a recess on the bush surface facing the pulley. In this case, the pulley should be provided with a protruding element having limited length, suitable to be inserted and to slide inside such a recess of the bush. Furthermore, a slot can be provided which, differently from the herein shown slot 3, is provided with a single closed end corresponding to the herein described end 3a and suitable to define a position of axial alignment between bush and pulley, whereas the other end could be open until thus reaching the outer edge of the bush.

Lastly, although a hole 2 has been described, this could be replaced by a slot so that to allow a roto-translation motion between bush and pulley.

In general, coupling means fall within the object and the protection scope of the present invention for the at least rotationally coupling, which allow to define at least one first position of axial misalignment between said pulley and said bush, and at least one second position of substantially axial alignment between pulley and bush. In the figures aligning means 10, 11 are further indicated, respectively positioned on the bush 2 and pulley 4, that are suitable to cooperate with an outer tool, such as for example a spanner wrench with adjustable rods, not shown in the figures, during the step of tensioning the belt system 13, as described in the following. In the embodiment herein shown the aligning means 10, 11 are shaped as holes.

The operation method of the embodiment of the present invention shown in the figures is presented in the following. The operation of the afore mentioned possible variations of the present invention can be immediately deduced by the following. Firstly, the bush 1 and the pulley 4 are rotatably assembled one to another. In particular, after coupling the seat 9 of the pulley 4 with the cylindrical protrusion 5 of the bush 1, the hole 2 of the bush 1 and a hole 8 of the pulley 4 are aligned so that to allow the insertion of the first constraining means 7a in the holes 2 and 8, and the insertion of the second constraining means 7b into the slot 3 of the bush 1 and a corresponding hole of the pulley 4. The pulley 4 and the bush 1 can thus rotate one to another substantially around the axis of the first constraining means 7a, i.e. the axis of the hole 2.

The assembly constituted by the bush 1 and pulley 4 is thus assembled on a shaft of the belt system 13. Alternatively, only the bush 4 can be assembled on the shaft before the afore described step of constraining the pulley 4 to the bush 1.

In the herein shown embodiment, the bush 1 is assembled, by virtue of the assembling hollow 6, on the drive shaft of the belt system 13. Appropriate means 6a, shaped as a recess in the herein shown embodiment, allow the integral rotationally coupling between bush 1 and drive shaft.

Once the bush 1 is constrained to the pulley 4 and the assembly bush 1 - pulley 4 has been inserted on the shaft of the belt system 13, a portion of the belt 12 of the belt system 13 can be assembled around the pulley 4.

The bush 1 and the pulley 4 are therefore in a first position of axial misalignment, shown in figure 2, and the belt is arranged partially slack on the belt system 13 which, in the shown embodiment, provides for a second coupling 14 between a second bush - and a second pulley. The coupling 14 is idle and is driven in rotation by the bush 1- pulley 4 coupling, which is assembled on the drive shaft of the system.

From this position a relative, substantially eccentric, rotation can be carried out between the bush 1 and the pulley 4 around the first constraining means 7a, which act as pivot pins around the hole 2, for example by using a spanner wrench and pointing the rod ends into the holes 10, 11 and getting the wrench rods closer one to another. Such a rotation method is obviously only one feasible example of possible operations which allow the relative rotation between the bush 1 and the pulley 4. Such a relative eccentric rotation occurs until the second constraining means 7b, like pin, reach their own limit stop, i.e. the end 3a of the slot 3. At this point the bush 1 and the pulley 4 are in the position of figure 3, i.e. in a position of substantially alignment between the axis of the pulley 4 and the axis of the bush 1.

It has to be noted herein that when reference is made to the axes of bush 1 and pulley 4 the respective symmetry axes are meant, i.e. those axes which will be the rotation axes of the pulley and the bush in the belt system 13.

The shown system 13 has a fixed center-to-center distance, whereby the distance between the drive shaft, constrained inside the assembling hollow 6, and the second bush - pulley coupling 14 of the belt system 13, can not be changed. During the relative rotation between bush 1 and pulley 4, therefore, the bush 1 holds its own position unchanged in the space, whereas the pulley 4 is rotated around the first constraining means 7a.

Due to this motion, the pulley 4 is subjected to a displacement, leftward in figures, moving away from the bush - pulley coupling 14 of the belt system 13, and thereby causes the tensioning of the belt 12.

Following such a step, the bush 1 can be steadily constrained to the pulley 4 in a manner known in the art, possibly both by tightening the afore said constraining means 7a, 7b when they are bolts, for example, and by fastening means for the steady fastening (not shown), which are for example constituted of threaded elements (bolts or screws) and can be inserted into the holes 20 and 80 of the bush 1 and the pulley 4, respectively, which are conveniently aligned when such components 1 and 4 are in their position of axial alignment.

In the embodiment of the figures, the same type of the constraining means 7a, 7b is used to steadily, and preferably reversibly, constrain the bush 1 to the pulley 4.

It has to be noted however that, although a belt system having a fixed center-to-center distance has been described, the present invention can also be used in case of shafts able to be translated one to another.

Furthermore, although in the embodiment herein described and shown in the figures a system 13 is visible having two pulleys only, the present invention can be equally applied to belt systems having a larger number of pulleys.

## Claims

1. Method for tensioning a belt of a belt system comprising at least one bush which can be constrained to a pulley of said belt system, said system comprising coupling means for coupling at least rotationally said bush with said pulley, said coupling means being suitable to define at least one first position of axial misalignment between said pulley and said bush and at least one second position of substantially axial alignment between said pulley and said bush, and fastening means for the steady fastening of said pulley with said bush, said method comprising the steps of:
a. constraining said bush to said pulley in an offset and at least rotatable way, through said coupling means for coupling at least rotationally;
b. assembling at least one portion of the belt of said belt system on said pulley;
c. carrying out a relative rotation between said bush and said pulley, until said second position of substantially axial alignment between said bush and said pulley is reached, so that to tension said belt;
d. constraining steadily said bush to said pulley, through said fastening means.

2. Method according to claim 1, wherein said step d) comprises the step of fastening said bush to said pulley steadily and reversibly, through said fastening means.

3. Method according to one of the preceding claims, wherein said coupling means comprise pivot means defining at least one eccentric rotation axis distant from the axis of said bush and said pulley, **characterized in that** said step c) comprises the step of rotating said pulley with respect to said bush around said eccentric rotation axis.

4. Method according to any one of the preceding claims, wherein said coupling means comprise guide means provided with at least one limit stop defining said second position of substantially axial alignment between bush and pulley, **characterized in that** said step c) comprises the step of displacing said pulley with respect to said bush by means of said guide means until at least one limit stop is reached.

5. Method according to one of the preceding claims wherein, before at least said step b), the step of constraining said bush to a drive shaft is carried out.

6. Belt system for transferring the motion from a drive pulley to at least one driven pulley, comprising at least one bush constrainable to a pulley of said belt system, comprising coupling means for coupling at least rotationally said bush with said pulley, which are suitable to define at least one first position of axial misalignment between said pulley and said bush and at least one second position of substantially axial alignment between said pulley and said bush, and fastening means for the steady fastening of said pulley with said bush.

7. System according to claim 6, wherein said belt system has a fixed center-to-center distance.

8. System according to claim 6 or 7, wherein said coupling means comprise guide means comprising a slot and a respective follower pin element, said slot comprising at least one limit stop for said follower pin corresponding to said second position of substantially axial alignment between said pulley and said bush.

9. System according to one of the preceding claims 6 to 8, wherein said coupling means comprise pivot means comprising at least one peripheral hole and a respective pivot pin element which define an axis of relative eccentric rotation between said pulley and said bush.

10. System according to one of the preceding claims 6 to 9, wherein said bush is constrained to a drive shaft of said system.

11. Bush for a pulley of a belt system, comprising coupling means for coupling at least rotationally said bush with said pulley, suitable to define at least one first position of axial misalignment between a pulley of a belt system and said bush, and at least one second position of substantially axial alignment, between said pulley and said bush.

12. Bush according to claim 11, wherein said coupling means comprise guide means comprising a slot inside which at least one follower pin element, which is constrained to said pulley, can be slidingly assembled.

13. Bush according to claim 11 or 12, wherein said coupling means comprise pivot means comprising at least one peripheral hole having the axis distant from the axis of said bush, inside which at least one pivot pin element constrained to said pulley can be assembled.

14. Bush according to claim 11, 12 or 13, **characterized by** comprising holes for steadily fastening said bush to said pulley.
